# EUROPEAN PATENT APPLICATION

(11) **EP 4 748 734 A1**
(43) Date of publication of application: **27.05.2026**
(21) Application number: 24856791.9
(22) Date of filing: 20.08.2024
(51) Int. Cl.: B65B 55/02, A23B 2/20, A23B 2/00

(54) **CART TREATMENT APPARATUS AND CART TREATMENT SYSTEM COMPRISING SAME**

(30) Priority: 21.08.2023 KR 20230109025
(71) Applicant: CJ Cheiljedang Corporation, Seoul 04560 (KR)
(72) Inventor: CHOI, Chun Myung, Seoul 04560 (KR); LEE, Seung Hoon, Seoul 04560 (KR); LEE, Seung Ho, Seoul 04560 (KR)
(74) Representative: Meissner Bolte Partnerschaft mbB
(86) International application number: PCT/KR2024/012344
(87) International publication number: WO 2025/042180

(57) **Abstract**

Disclosed is a carriage handling apparatus including a carriage accommodation part configured to provide a plurality of chambers configured to accommodate a carriage that is a heat treatment target, and a seal-forming portion part configured to selectively form gastightness between first and second chambers that are two adjacent chambers among the plurality of chambers, in which the seal-forming portion part is configured to be placed in a gastight state, in which the seal-forming portion part forms the gastightness between the first chamber and the second chamber, when the first chamber and the second chamber are different in pressure from each other.

## Description

### [Technical Field]

### [CROSS-REFERENCE TO RELATED APPLICATION]

This application claims priority to and the benefit of Korean Patent Application No. 10-2023-0109025 filed in the Korean Intellectual Property Office on August 21, 2023, the entire contents of which are incorporated herein by reference.

The present disclosure relates to a carriage handling apparatus and a carriage handling system including the same.

### [Background Art]

Retort food refers to food produced by applying high-temperature heat to a sealed food product to sterilize the food product and then rapidly cooling the food product. A retort sterilizer refers to a device that performs the operation of applying high-temperature heat to the sealed product during the process of manufacturing the retort food.

Various methods have been applied to improve efficiency in producing a plurality of products by handling the plurality of products within a short period of time while uniformly and appropriately sterilizing the products.

A batch method may be used in which products are loaded into a carriage, the carriage is introduced into the sterilizer, and all handling processes, including a sterilization process, are performed at once. In this case, there is a problem in that additional heat treatment time is required because of low thermal efficiency, and uniform heating is not achieved because of the occurrence of a deviation in heat distribution.

Recently, in order to solve the problem with the sterilizer to which the above-mentioned batch method is applied, development has been actively conducted on a sterilizer that adopts a continuous method that handles products one by one in separate spaces while continuously transferring the products.

A retort sterilizer, to which the continuous method in the related art is applied, provides a plurality of different spaces in which heating, sterilizing, and cooling processes are respectively performed. Meanwhile, in case that pressures in two adjacent spaces, among the plurality of spaces, become different from each other while the respective processes are performed in the retort sterilizer to which the continuous method in the related art is applied, a problem occurs in which any one of the two spaces changes a state of the other space.

### [Disclosure]

### [Technical Problem]

Accordingly, an object to be achieved by the present disclosure is to provide a carriage handling apparatus that forms gastightness between two adjacent spaces in case that the two adjacent spaces are different in pressure from each other, thereby preventing any one of the two spaces from affecting a state of the other space.

### [Technical Solution]

In order to achieve the above-mentioned object, according to one aspect of the present disclosure, it is possible to provide a carriage handling apparatus including: a carriage accommodation part configured to provide a plurality of chambers configured to accommodate a carriage that is a heat treatment target; and a seal-forming portion part configured to selectively form gastightness between first and second chambers that are two adjacent chambers among the plurality of chambers, in which the seal-forming portion part is configured to be placed in a gastight state, in which the seal-forming portion part forms the gastightness between the first chamber and the second chamber, when the first chamber and the second chamber are different in pressure from each other.

In addition, it is possible to provide the carriage handling apparatus, in which the seal-forming portion part is further configured to be placed in a non-gastight state that is a state in which the seal-forming portion part departs from the gastight state when the first chamber and the second chamber are equal in pressure to each other.

In addition, it is possible to provide the carriage handling apparatus, in which when a direction in which the first chamber and the second chamber are directed toward each other is referred to as a forward/rearward direction, a compressive force is applied to the seal-forming portion part in the forward/rearward direction when the seal-forming portion part is placed in the gastight state, and the compressive force applied to the seal-forming portion part is eliminated when the seal-forming portion part switches from the gastight state to the non-gastight state.

In addition, it is possible to provide the carriage handling apparatus, in which the seal-forming portion part is configured to allow a material to move between the first chamber and the second chamber when the seal-forming portion part is placed in the non-gastight state.

In addition, it is possible to provide the carriage handling apparatus, in which the seal-forming portion part includes: a plate disposed between the first chamber and the second chamber and formed with a communication hole configured to allow the first chamber and the second chamber to communicate with each other; and a door configured to close the communication hole, and in which when a direction in which the door is directed toward the plate is referred to as a first direction, the door is placed at a closed position, at which the door closes the communication hole, as the door presses the plate in the first direction when the seal-forming portion part is placed in the gastight state.

In addition, it is possible to provide the carriage handling apparatus, in which when a direction in which the first chamber and the second chamber are directed toward each other is referred to as a forward/rearward direction, the door is configured to move in an upward/downward direction relative to the plate between a closure-introduced position, at which the door blocks the communication hole, and an opened position, at which the door does not block at least a part of the communication hole, when the seal-forming portion part is placed in the non-gastight state.

In addition, it is possible to provide the carriage handling apparatus, in which the seal-forming portion part may further include a guide rail configured to guide a movement of the door in the upward/downward direction, in which the door includes a guide roller configured to rotate about a rotation axis, which extends in the forward/rearward direction, along the guide rail when the door moves in the upward/downward direction, in which the guide roller is formed with a roller groove into which the guide rail is inserted, and in which a width of the roller groove in the forward/rearward direction is larger than a width of the guide rail in the forward/rearward direction.

In addition, it is possible to provide the carriage handling apparatus, in which the pressure in the first chamber is equal to or higher than the pressure in the second chamber, and in which the first chamber, the door, the plate, and the second chamber are sequentially arranged in the forward/rearward direction.

In addition, it is possible to provide the carriage handling apparatus, in which the second chamber includes a second-first chamber and a second-second chamber respectively disposed at two opposite ends of the first chamber based on the forward/rearward direction, in which the seal-forming portion part includes: a first seal-forming portion part disposed between the first chamber and the second-first chamber; and a second seal-forming portion part disposed between the first chamber and the second-second chamber, and in which when a door and a plate of the first seal-forming portion part are respectively referred to as a first door and a first plate and a door and a plate of the second seal-forming portion part are respectively referred to as a second door and a second plate, the first plate, the first door, the second door, and the second plate are sequentially arranged in the forward/rearward direction.

In addition, it is possible to provide the carriage handling apparatus, in which based on a state in which the door is placed in a maximally lowered state, the door is placed at the closure-introduced position when the pressure in the first chamber is equal to the pressure in the second chamber, and the door is placed at the closed position when the pressure in the first chamber is higher than the pressure in the second chamber.

In addition, it is possible to provide the carriage handling apparatus, in which the door is configured to move toward the plate when the door switches from the closure-introduced position to the closed position.

In addition, it is possible to provide the carriage handling apparatus, in which the seal-forming portion part may further include a packing configured to maintain the gastightness formed between the first chamber and the second chamber by being tightly attached to the plate and the door when the seal-forming portion part is placed in the gastight state.

In addition, it is possible to provide the carriage handling apparatus, in which a ring-shaped groove, which surrounds the communication hole, is formed in one surface of the plate that faces the door, and in which the packing is inserted into the groove and fixed to the plate.

In addition, it is possible to provide a carriage handling system including: a treatment apparatus configured to heat-treat a carriage; a carriage accommodation part configured to provide a plurality of chambers configured to accommodate the carriage; a seal-forming portion part configured to selectively form gastightness between first and second chambers that are two adjacent chambers among the plurality of chambers; and a control device configured to control a posture of the seal-forming portion part, in which the control device controls the posture of the seal-forming portion part so that the seal-forming portion part is placed in a gastightness-introduced state when the first chamber and the second chamber are equal in pressure, and in which when a direction in which the first chamber and the second chamber are directed toward each other is referred to as a forward/rearward direction, the seal-forming portion part placed in the gastightness-introduced state switches to a gastight state, in which the seal-forming portion part forms the gastightness between the first chamber and the second chamber, by a compressive force applied to the seal-forming portion part in the forward/rearward direction when the pressures in the first and second chambers become different from each other.

In addition, it is possible to provide the carriage handling system, in which the treatment apparatus is configured to independently provide thermal energy to each of the plurality of chambers.

### [Advantageous Effects]

The carriage handling apparatus according to the present disclosure forms gastightness between the two adjacent spaces in case that the two spaces are different in pressure from each other, thereby preventing any one of the two spaces from affecting the state of the other space.

### [Description of Drawings]

FIG. 1 is a block diagram illustrating a carriage handling system according to an embodiment of the present disclosure.
FIG. 2 is a perspective view illustrating the carriage handling system according to the embodiment of the present disclosure.
FIG. 3 is a view illustrating an interior of a carriage handling apparatus and obtained by cutting some components along line A-A' in FIG. 2.
FIG. 4 is a conceptual view illustrating the carriage handling apparatus while schematically illustrating the carriage handling apparatus according to the embodiment of the present disclosure when viewed from the lateral side.
FIG. 5 is a front view illustrating a plate according to the embodiment of the present disclosure.
FIG. 6 is a front view illustrating a door assembly according to the embodiment of the present disclosure.
FIG. 7 is a view illustrating a seal-forming portion placed in a non-gastight state according to the embodiment of the present disclosure when viewed from the lateral side.
FIG. 8 is a view illustrating the seal-forming portion part placed in a gastight state according to the embodiment of the present disclosure when viewed from the lateral side.
FIG. 9 is a conceptual view illustrating the seal-forming portion part while schematically illustrating the seal-forming portion part placed in the non-gastight state according to the embodiment of the present disclosure when viewed in an upward/downward direction.
FIG. 10 is a conceptual view illustrating the seal-forming portion part while schematically illustrating the seal-forming portion part placed in the gastight state according to the embodiment of the present disclosure when viewed in the upward/downward direction.

### [Mode for Invention]

Hereinafter, some embodiments of the present disclosure will be described in detail with reference to the illustrative drawings. In giving reference numerals to constituent elements of the respective drawings, it should be noted that the same constituent elements will be designated by the same reference numerals, if possible, even though the constituent elements are illustrated in different drawings. Further, in the following description of the embodiments of the present disclosure, a detailed description of related publicly-known configurations or functions will be omitted when it is determined that the detailed description obscures the understanding of the embodiments of the present disclosure.

In addition, the terms first, second, A, B, (a), and (b) may be used to describe constituent elements of the embodiments of the present disclosure. These terms are used only for the purpose of discriminating one constituent element from another constituent element, and the nature, the sequences, or the orders of the constituent elements are not limited by the terms. When one constituent element is described as being "connected to", "accommodated in", or "inserted into" another constituent element, it should be understood that one constituent element can be connected directly to, accommodated directly in, or inserted directly into another constituent element, and an intervening constituent element can also be "connected to", "accommodated in", or "inserted into" to the constituent elements.

Hereinafter, a carriage handling system 1 according to the present disclosure will be described with reference to the drawings.

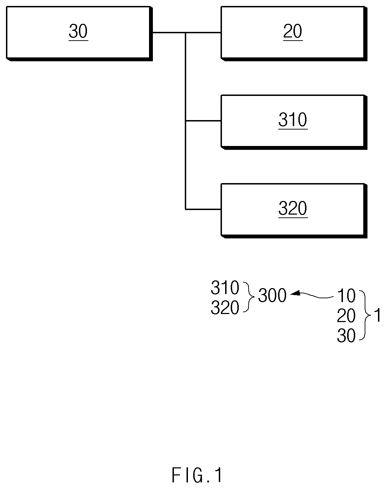

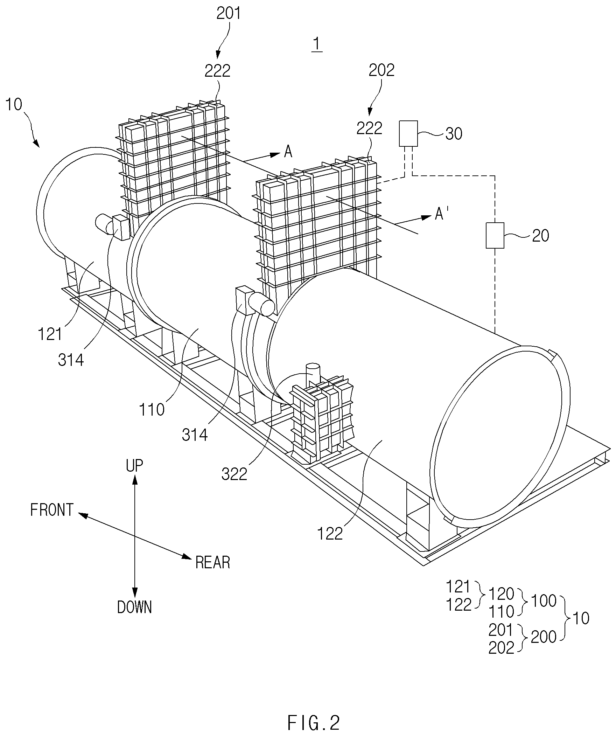

With reference to FIGS. 1 and 2, the carriage handling system 1 may heat-treat a carriage C to sterilize products accommodated in the carriage C. For example, the carriage handling system 1 may be a retort sterilizer. In addition, for example, the product accommodated in the carriage C may be retort food. The carriage handling system 1 may include a carriage handling apparatus 10, a treatment apparatus 20, and a control device 30.

The carriage handling apparatus 10 may heat-treat the carriage C. The carriage handling apparatus 10 may include a carriage accommodation part 100, a seal-forming portion part 200, and a driving part 300. The carriage accommodation part 100 may accommodate the carriage C. For example, the carriage accommodation part 100 may provide a plurality of chambers 110a and 120a that may accommodate the carriages C. The carriage accommodation part 100 may include a central chamber body 110 and a side chamber body 120.

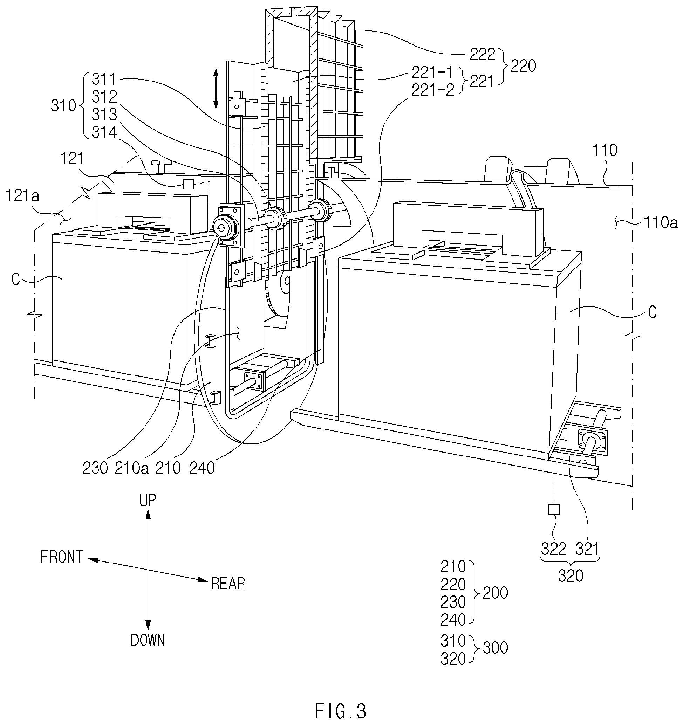

With reference further to FIG. 3, the central chamber body 110 may provide a first chamber 110a that may accommodate the carriage C. The first chamber 110a may be defined as an internal space of the central chamber body 110 surrounded by an inner peripheral surface of the central chamber body 110. The carriage C may be sterilized in the central chamber body 110. The central chamber body 110 may have a cylindrical shape extending in a forward/rearward direction and opened at front and rear sides thereof.

The side chamber body 120 may be disposed at a front or rear end of the central chamber body 110. The side chamber body 120 may provide a second chamber 120a that may accommodate the carriage C. In addition, pressure in the first chamber 110a may be equal to or higher than pressure in the second chamber 120a. The side chamber body 120 may be provided as a plurality of side chamber bodies 120. The plurality of side chamber bodies 120 may include a first side chamber body 121 and a second side chamber body 122. In addition, the second chamber 120a may be provided as a plurality of second chambers 120a. The plurality of second chambers 120a may include a second-first chamber 121a and a second-second chamber 122a.

The first side chamber body 121 may provide the second-first chamber 121a. The second-first chamber 121a may be defined as an internal space of the first side chamber body 121 surrounded by an inner peripheral surface of the first side chamber body 121. The carriage C may be heated or cooled in the first side chamber body 121. For example, the first side chamber body 121 may be disposed at a front side of the central chamber body 110. The first side chamber body 121 may be referred to as a 'front chamber body'. The first side chamber body 121 may have a cylindrical shape extending in the forward/rearward direction.

The second side chamber body 122 may provide the second-second chamber 122a. The second-second chamber 122a may be defined as an internal space of the second side chamber body 122 surrounded by an inner peripheral surface of the second side chamber body 122. The carriage C may be cooled or heated in the second side chamber body 122. For example, the carriage C may be cooled in the first side chamber body 121, and the carriage C may be heated in the second side chamber body 122. In a more detailed example, the carriage C may be sequentially heated, sterilized, and cooled while the carriage C is transferred in the carriage accommodation part 100. In other words, the second side chamber body 122, the central chamber body 110, and the first side chamber body 121 may be sequentially arranged in a direction (e.g., forward direction) in which the carriage C is transferred in the carriage accommodation part 100.

For example, the second side chamber body 122 may be disposed at a rear side of the central chamber body 110. The second side chamber body 120 may be referred to as a 'rear chamber body'. In other words, the first side chamber body 121 and the second side chamber body 122 may be disposed at two opposite ends of the central chamber body 110 based on the forward/rearward direction with the central chamber body 110 interposed therebetween. Therefore, the second-first chamber 121a and the second-second chamber 122a may be respectively disposed at two opposite ends of the first chamber 110a based on the forward/rearward direction with the first chamber 110a interposed therebetween.

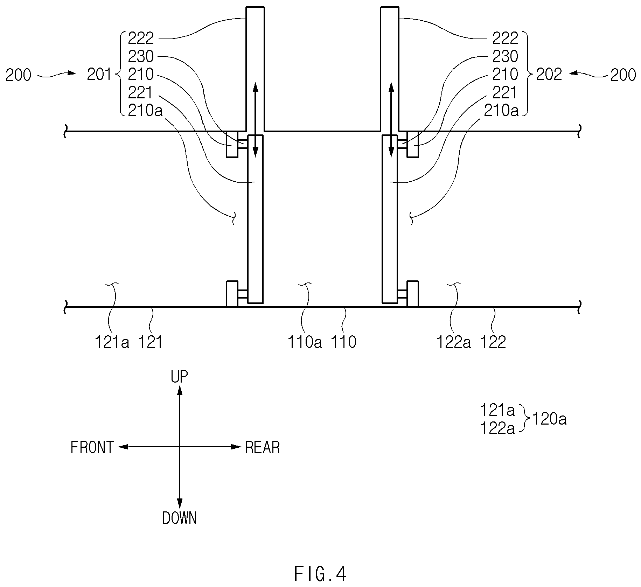

With reference further to FIG. 4, the seal-forming portion part 200 may selectively form gastightness between two adjacent chambers (e.g., the first chamber 110a and the second chamber 120a) among the plurality of chambers. The seal-forming portion part 200 may be placed in any one of a gastight state and a non-gastight state.

When the seal-forming portion part 200 is placed in the gastight state, the gastightness may be formed between the two adjacent chambers. The seal-forming portion part 200 may be placed in the gastight state when the two adjacent chambers are different in pressure from each other. When the seal-forming portion part 200 is placed in the gastight state, a compressive force may be applied to the seal-forming portion part 200 in the forward/rearward direction. For example, one side of the seal-forming portion part 200 based on the forward/rearward direction may be fixed to the carriage accommodation part 100, and the other side of the seal-forming portion part 200 based on the forward/rearward direction may be pressed in a direction toward one side based on the forward/rearward direction.

In a more detailed example, because of a difference in pressure between the two adjacent chambers, one side of the seal-forming portion part 200 based on the forward/rearward direction may be pressed in a direction from a chamber having a relatively high pressure toward a chamber having a relatively low pressure. One side of the seal-forming portion part 200 based on the forward/rearward direction may be disposed adjacent to the chamber having a relatively high pressure, and the other side of the seal-forming portion part 200 based on the forward/rearward direction may be disposed adjacent to the chamber having a relatively low pressure.

When the seal-forming portion part 200 is placed in the non-gastight state, the gastightness may not be formed between the two adjacent chambers. The seal-forming portion part 200 may be placed in the non-gastight state when the two adjacent chambers are equal in pressure to each other. When the seal-forming portion part 200 is placed in the non-gastight state, no compressive force may be applied to the seal-forming portion part 200 in the forward/rearward direction. For example, when the seal-forming portion part 200 switches from the gastight state to the non-gastight state, the compressive force, which has been applied to the seal-forming portion part 200, may be eliminated.

The non-gastight state may include a gastightness-introduced state and a spaced state. In other words, the seal-forming portion part 200 may be placed in any one of the gastightness-introduced state and the spaced state when the two adjacent chambers are equal in pressure to each other.

When the seal-forming portion part 200 is placed in the gastightness-introduced state, a door assembly 220 and a packing 230, which will be described below, may be tightly attached to each other. The seal-forming portion part 200 placed in the gastightness-introduced state may form a partition wall that blocks the two adjacent chambers. In addition, when the seal-forming portion part 200 is placed in the gastightness-introduced state, no compressive force is applied to the seal-forming portion part 200, such that the door assembly 220 and the packing 230 may be placed in a state in which the door assembly 220 and the packing 230 are in physical contact with each other without pressing each other.

When the seal-forming portion part 200 is placed in the spaced state, at least a part of the door assembly 220 may be spaced apart from the packing 230. When the seal-forming portion part 200 is placed in the spaced state, the seal-forming portion part 200 may allow materials to move between the two adjacent chambers (e.g., the first chamber 110a and the second chamber 120a). In other words, when the seal-forming portion part 200 is placed in the gastight state, the seal-forming portion part 200 may restrict the movement of the materials between the two adjacent chambers. The seal-forming portion part 200 may include a plate 210, the door assembly 220, the packing 230, and guide rails 240.

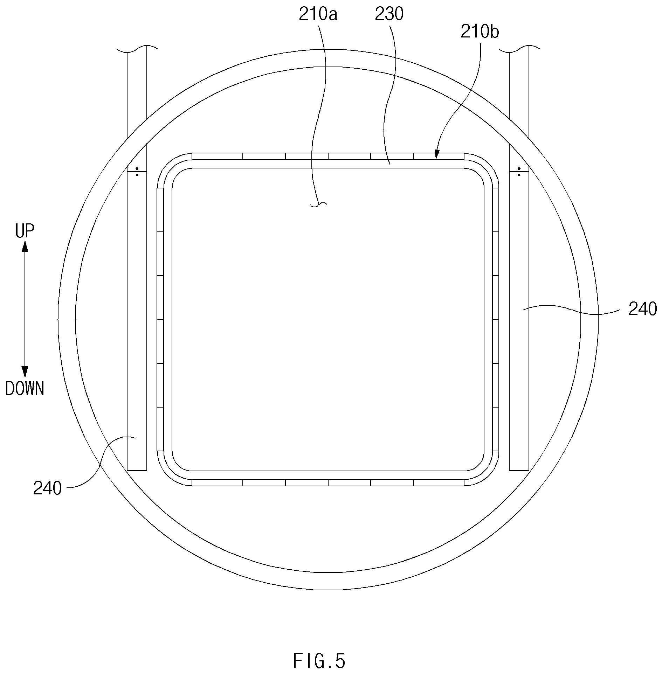

With reference further to FIG. 5, the plate 210 may be disposed between the two adjacent chambers. The plate 210 may be fixed to the carriage accommodation part 100. In addition, a communication hole 210a may be formed in a central portion of the plate 210. The communication hole 210a may be disposed between the two adjacent chambers and allow the two adjacent chambers to communicate with each other.

In addition, the door assembly 220 may include a door 221 and a door receptacle 222.

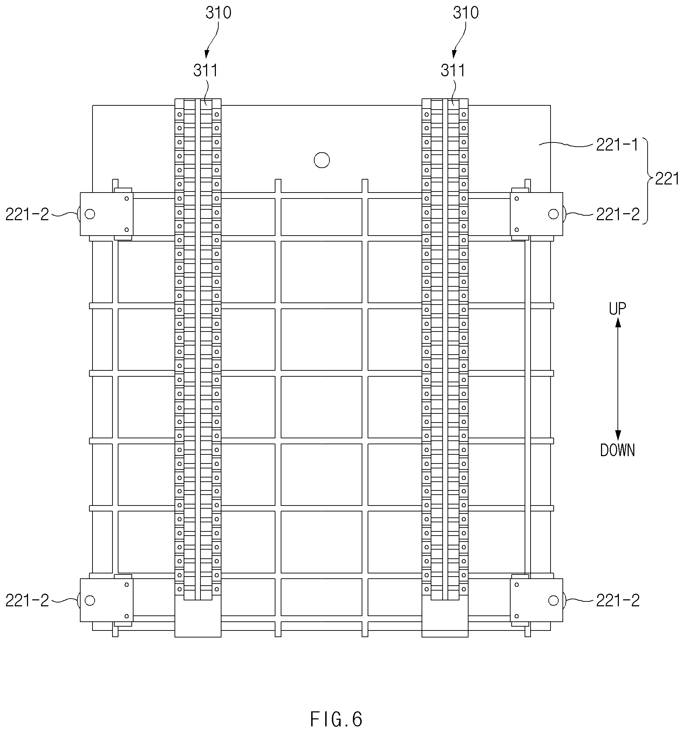

With reference further to FIG. 6, the door 221 may open or close the communication hole 210a. The door 221 may be placed at any one of a closed position, a closure-introduced position, and an opened position.

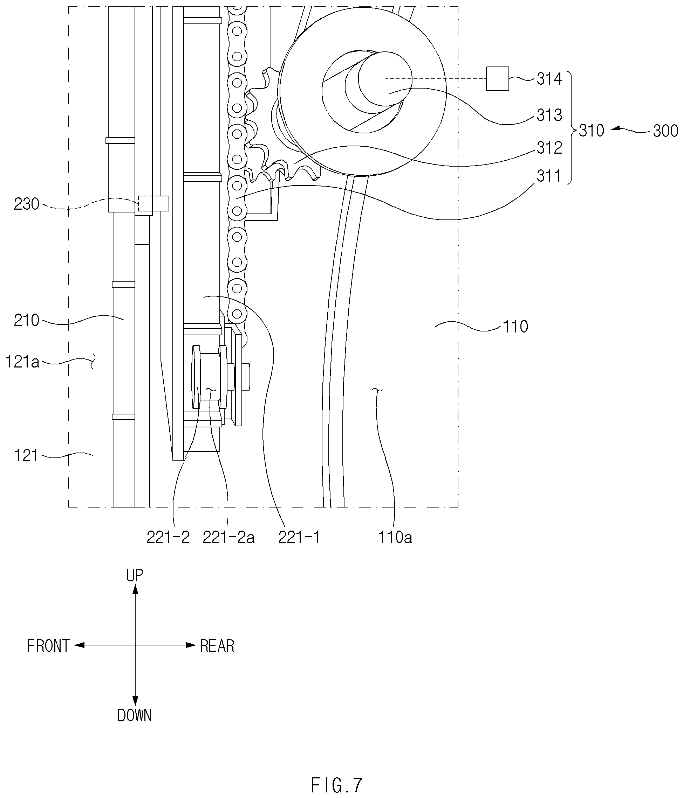

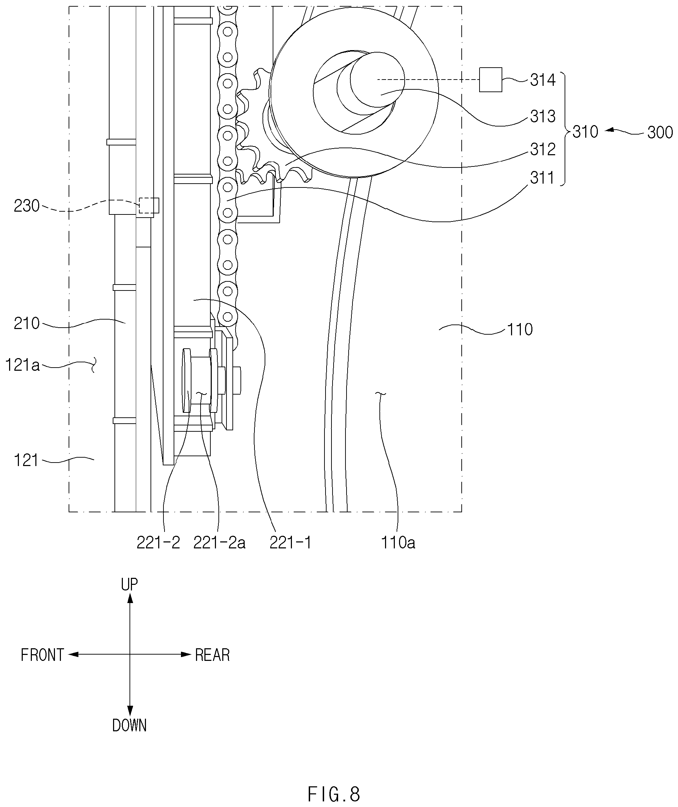

With reference further to FIGS. 7 and 8, the door 221 may be placed at the closed position when the two adjacent chambers are different in pressure from each other. In other words, when the door 221 is placed at the closed position, the seal-forming portion part 200 may be placed in the gastight state. When the door 221 is placed at the closed position, the communication hole 210a may be closed. In case that the communication hole 210a is closed, the two adjacent chambers may be blocked from each other (e.g., the movement of the material may be blocked).

With reference back to FIG. 8, when the door 221 is placed at the closed position, the door 221 may press the plate 210 in a first direction. The first direction may refer to a direction in which the door 221 is directed toward the plate 210.

With reference back to FIG. 7, the door 221 may be placed at the closure-introduced position when the two adjacent chambers are different in pressure from each other and when the door 221 is placed in a maximally lowered state. When the door 221 is placed at the closure-introduced position, the seal-forming portion part 200 may be placed in the gastightness-introduced state. When the door 221 is placed at the closure-introduced position, the door 221 may be disposed to block the communication hole 210a. For example, the door 221 placed at the closure-introduced position may be disposed to block one side of the communication hole 210a based on the forward/rearward direction. In addition, when the door 221 is placed at the closure-introduced position, the door 221 may not press the plate 210.

The door 221 may be moved toward the plate 210 when the door 221 switches from the closure-introduced position to the closed position. In other words, the seal-forming portion part 200 may have a structure that allows the door 221 placed at the closure-introduced position to move by a predetermined distance in the direction toward the plate 210.

In other words, the door 221 may press the plate 210 when the door 221 switches from the closure-introduced position to the closed position. For example, when the door 221 switches from the closure-introduced position to the closed position, the door 221 may press the packing 230, and the packing 230 may press the plate 210.

The door 221 may be placed at the opened position when the two adjacent chambers are different in pressure from each other. When the door 221 is placed at the opened position, the seal-forming portion part 200 may be placed in the spaced state. When the door 221 is placed at the opened position, at least a part of the communication hole 210a may allow the two adjacent chambers to communicate with each other. For example, when the door 221 is placed at the opened position, the door 221 may not block at least a part of the communication hole 210a. In other words, when the door 221 is placed at the opened position, a part of the communication hole 210a may be opened, and the remaining part of the communication hole 210a may be blocked by the door 221. Furthermore, when the door 221 is placed at the opened position, the entire communication hole 210a may be opened.

The door 221 may move in an upward/downward direction between the closure-introduced position and the opened position relative to the plate 210. A position of the door 221 may be sequentially changed by the pressures in the two adjacent chambers. For example, when the state switches from a state in which the two adjacent chambers are different in pressure from each other to a state in which the two adjacent chambers are equal in pressure to each other, the door 221 may switch from the closed position to the closure-introduced position.

In addition, the door 221 may switch from the closure-introduced position to the opened position as the door 221 moves upward relative to the plate 210. In other words, the seal-forming portion part 200 may switch from the gastightness-introduced state to the spaced state when the door 221 moves upward relative to the plate 210 so that the door 221 placed at the closure-introduced position switches to the opened position.

As described above, in case that the door 221 moves upward from the closure-introduced position instead of the closed position, a frictional force, which is generated by contact with the packing 230 while the door 221 moves upward, may be minimized. In other words, when the door 221 is placed at the closed position, the door 221 and the packing 230 are placed in a pressing-contact state in which the door 221 and the packing 230 are tightly attached to each other while pressing each other. In case that the door 221 moves upward in the state in which the door 221 is tightly attached to the packing 230 in this pressing-contact state, a high frictional force may be applied between the door 221 and the packing 230, and the door 221 and the packing 230 may be damaged by the high frictional force. Meanwhile, in the case of the present disclosure, the door 221 may move upward relative to the plate 210 when the door 221 is placed at the closure-introduced position instead of the closed position, such that the door 221 may be prevented from moving upward in the pressing-contact state, thereby minimizing damage to the door 221 and the packing 230.

In addition, in case that the two adjacent chambers are the first chamber 110a and the second chamber 120a, the first chamber 110a, the door 221, the plate 210, and the second chamber 120a may be sequentially arranged when the seal-forming portion part 200 is viewed in the forward/rearward direction. In other words, the door 221 may be disposed to be closer to the chamber having a relatively high pressure than the plate 210 to the chamber having a relatively high pressure, and the plate 210 may be disposed to be closer to the chamber having a relatively low pressure than the door 221 to the chamber having a relatively low pressure. As described above, an arrangement relationship between the door 221 and the plate 210 is set based on the pressures in the two chambers, such that the door 221 and the plate 210 may be pressed so that the door 221 and the plate 210 become close to each other in case that the pressures in the two chambers become different from each other. In other words, it is possible to prevent a situation in which the seal-forming portion part 200 is damaged when the door 221 and the plate 210 are pressed so that the door 221 and the plate 210 become distant from each other in case that the pressures in the two chambers become different from each other. The door 221 may include a door body 221-1 and guide rollers 221-2.

The door body 221-1 may define an external appearance of the door 221. When the door 221 moves in the upward/downward direction, the guide roller 221-2 may rotate about a predetermined rotation axis (e.g., an imaginary straight line extending in the forward/rearward direction) along the guide rail 240. The guide roller 221-2 may be disposed on one surface of the door body 221-1. A roller groove 221-2a may be formed in the guide roller 221-2.

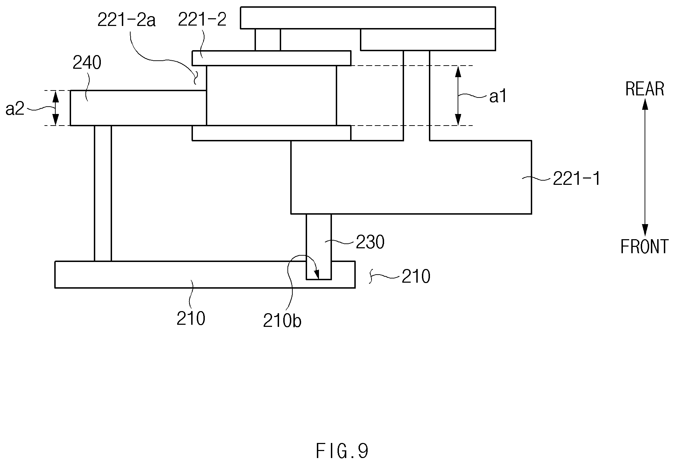

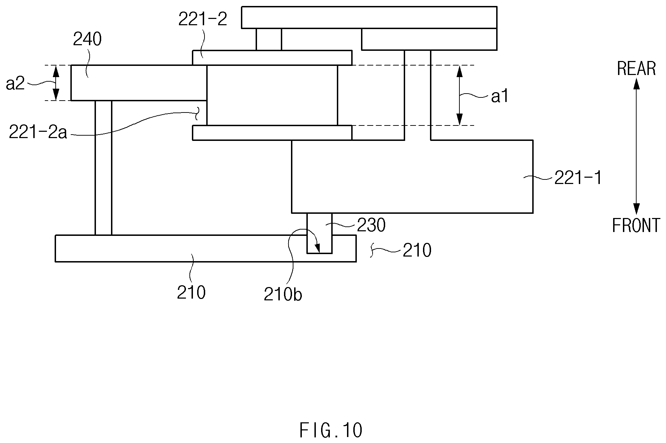

With reference further to FIGS. 9 and 10, the roller groove 221-2a may refer to a space into which the guide rail 240 may be inserted. A first width a1, which is a width of the roller groove 221-2a in the forward/rearward direction, may be larger than a second width a2 that is a width of the guide rail 240 in the forward/rearward direction. Because of a difference in magnitude between the first width a1 and the second width a2, the door 221 may move toward the plate 210.

The door receptacle 222 may provide an accommodation space for accommodating the door 221. For example, the door receptacle 222 may accommodate at least a part of the door 221 placed at the opened position. In addition, when the door receptacle 222 is placed at the closed position or the closure-introduced position, the door 221 may depart from the accommodation space. The door receptacle 222 may be disposed above the carriage accommodation part 100.

The packing 230 may be tightly attached to the respective constituent elements at boundaries between the constituent elements, thereby maintaining the gastightness. When a fluid is introduced into the packing 230, the packing 230 may be expanded and tightly attached to the respective constituent elements strongly, thereby maintaining the gastightness.

When the seal-forming portion part 200 is placed in the gastight state, the packing 230 may maintain the gastightness formed between the two adjacent chambers. When the seal-forming portion part 200 is placed in the gastight state, the packing 230 may be tightly attached to the plate 210 and the door 221. For example, when the seal-forming portion part 200 is placed in the gastight state, a compressive force may be applied to the packing 230 in the forward/rearward direction. In a more detailed example, a width of the packing 230 in the forward/rearward direction when the seal-forming portion part 200 is placed in the gastightness-introduced state may be larger than a width of the packing 230 in the forward/rearward direction when the seal-forming portion part 200 is placed in the gastight state. In other words, when the seal-forming portion part 200 switches from the gastightness-introduced state to the gastight state, the packing 230 may be compressed in the forward/rearward direction so that the width in the forward/rearward direction decreases.

The packing 230 may be disposed between the plate 210 and the door 221 based on the forward/rearward direction. For example, the packing 230 may be inserted into a packing groove 210b that is a groove formed in the plate 210, such that the packing 230 may be fixed to the plate 210. The packing groove 210b may have a ring shape that surrounds the communication hole 210a. In the present specification, the term "ring shape" is not limited to a circular ring and may be understood as collectively referring to any shape that defines a closed curve. Therefore, the ring shape may include a toroidal shape, a peripheral shape of a polygon, a peripheral shape of a polygon with rounded corners, or the like. For example, the packing 230 may be a gasket made of an elastic material.

With reference back to FIGS. 9 and 10, the guide rails 240 may guide the movement of the door 221 in the upward/downward direction. The guide rail 240 may be fixed to the plate 210. For example, the door 221 may be allowed to move in the forward/rearward direction by a difference value between the first width a1 and the second width a2 relative to the guide rail 240 fixed to the plate 210.

For example, when a direction in which the door 221 is directed toward the plate 210 is referred to as a forward direction, a front end of the guide roller 221-2 may be in contact with a front end of the guide rail 240 when the door 221 is placed at the closed position. In addition, when the door 221 switches from the closed position to the closure-introduced position, the door 221 may move rearward by the difference value between the first width a1 and the second width a2 relative to the guide rail 240.

The guide rail 240 may extend in the upward/downward direction. In addition, the guide rail 240 may be provided as a plurality of guide rails 240 disposed at two opposite left and right sides of the communication hole 210a and spaced apart from one another.

The seal-forming portion part 200 may be provided as a plurality of seal-forming portion parts 200. The plurality of seal-forming portion parts 200 may include a first seal-forming portion part 201 and a second seal-forming portion part 202. The first seal-forming portion part 201 may be disposed between the central chamber body 110 and the first side chamber body 121. In other words, the first seal-forming portion part 201 may be disposed between the first chamber 110a and the second-first chamber 121a. The first seal-forming portion part 201 may selectively form gastightness between the first chamber 110a and the second-first chamber 121a.

The second seal-forming portion part 202 may be disposed between the central chamber body 110 and the first side chamber body 122. In other words, the second seal-forming portion part 202 may be disposed between the first chamber 110a and the second-second chamber 122a. The second seal-forming portion part 202 may selectively form gastightness between the first chamber 110a and the second-first chamber 122a.

The door and the plate of the first seal-forming portion part 201 may be respectively referred to as a first door and a first plate. In addition, the door and the plate of the second seal-forming portion part 202 may be respectively referred to as a second door and a second plate. The first plate, the first door, the second door, and the second plate may be sequentially arranged in the forward/rearward direction. For example, because the pressure in the first chamber 110a is higher than the pressure in the second-first chamber 121a, the first door may be disposed to be relatively closer to the first chamber 110a than the first plate to the first chamber 110a. In addition, because the pressure in the first chamber 110a is higher than the pressure in the second-second chamber 122a, the second door may be disposed to be relatively closer to the first chamber 110a than the second plate to the first chamber 110a. In other words, the first door and the second door may be disposed to face each other.

The driving part 300 may include a door driver 310 and a carriage driver 320. The door driver 310 may move the door 221 in the upward/downward direction. The door driver 310 may include driving chains 311, driving sprockets 312, a driving shaft 313, and a driving motor 314.

The driving chain 311 may be provided in the form of a chain that may engage with the driving sprocket 312. The driving chain 311 may be connected to one surface of the door body 221-1. The driving chain 311 may extend in the upward/downward direction. In addition, the driving chains 311 may be provided as a plurality of driving chains 311 arranged to be spaced apart from one another.

The driving sprocket 312 may be fixed to the driving shaft 313. For example, the driving sprocket 312 may rotate together with the driving shaft 313. The driving sprockets 312 may be provided as a plurality of driving sprockets 312 corresponding in number to the driving chains 311.

The driving shaft 313 may be a shaft member extending in a leftward/rightward direction. The leftward/rightward direction may be defined as a direction perpendicular to the upward/downward direction and the forward/rearward direction. The driving shaft 313 may rotate about a rotation axis extending in the leftward/rightward direction. The driving shaft 313 may be connected to the driving motor 314.

The driving motor 314 may be a motor that may rotate the driving shaft 313. In case that the driving motor 314 rotates, the driving shaft 313 and the driving sprocket 312 may also rotate. When the driving sprocket 312 rotates, the driving chain 311, which engages with the driving sprocket 312, may move the door 221 upward or downward in the upward/downward direction.

The carriage driver 320 may transfer the carriage C in the forward/rearward direction. For example, the carriage driver 320 may transfer the carriage C sequentially along the second side chamber body 122, the central chamber body 110, and the first side chamber body 121. The carriage driver 320 may include a driving rail 321 and a carriage driving motor 322.

The driving rail 321 may guide the movement of the carriage C in the forward/rearward direction. The driving rail 321 may extend in the forward/rearward direction. The driving rail 321 may be disposed below the carriage accommodation part 100. A transfer member for transferring the carriage C may be provided on the driving rail 321. The transfer member may be configured as various means, such as a roller or a conveyor belt, which may transfer the carriage C. The carriage driving motor 322 may operate the transfer member. Meanwhile, the spirit of the present disclosure is not limited thereto. The driving part 300 may be a component included in the carriage handling system 1 instead of being included in the carriage handling apparatus 10.

The treatment apparatus 20 may independently provide thermal energy to each of the plurality of chambers. The configuration of providing thermal energy to any component may be understood as a concept including all the processes of heating and cooling any component. In addition, the configuration of cooling any component may be understood as a concept including not only a process of cooling any component by providing cold energy to the component but also a process of lowering a temperature of any component.

The treatment apparatus 20 may provide thermal energy to the carriage C to heat-treat the carriage C. For example, the treatment apparatus 20 may heat the chamber in which the carriage C is accommodated, and the carriage C may be provided with thermal energy from the heated chamber. In addition, the treatment apparatus 20 may absorb thermal energy from the carriage C so that the carriage C is cooled. For example, the treatment apparatus 20 may cool the chamber in which the carriage C is accommodated, and the cooled chamber may absorb thermal energy from the carriage C.

The treatment apparatus 20 may be provided with a heating medium providing device for heat-treating or cooling the carriage C. A heating medium may be vapor, hot water, refrigerant, or the like. The heating medium providing device may include a pump, a nozzle, and the like in order to pump the heating medium. The treatment apparatus 20 may include a heat treatment device and a cooling treatment device.

The heat treatment device may heat-treat the carriage C accommodated in the carriage accommodation part 100. For example, the heat treatment device may independently provide thermal energy to each of the plurality of chambers. For example, the heat treatment device may include an electric burner, a gas burner, or the like.

The cooling treatment device may cool the carriage C. For example, the treatment apparatus 20 may independently absorb thermal energy from each of the plurality of chambers. For example, the cooling treatment device may be a chiller.

In addition, the carriage handling system 1 may further include a pressure sensor and a pressure control valve.

The pressure sensor may measure pressure in the chamber. The pressure sensor may be provided as a plurality of pressure sensors. The plurality of pressure sensors may be provided to respectively correspond to the plurality of chambers. In other words, the plurality of pressure sensors may include a first pressure sensor configured to measure pressure in the first chamber 110a, a second-first pressure sensor configured to measure pressure in the second-first chamber 121a, and a second-second pressure sensor configured to measure pressure in the second-second chamber 122a.

In addition, the pressure control valve may adjust pressure in the chamber. For example, the pressure control valve may increase or decrease the pressure in the chamber. The pressure control valve may be controlled by the control device 30. In addition, the pressure control valve may be provided as a plurality of pressure control valves. The plurality of pressure control valves may be provided to respectively correspond to the plurality of chambers. In other words, the plurality of pressure control valves may include a first pressure control valve configured to adjust pressure in the first chamber 110a, a second-first pressure control valve configured to adjust pressure in the second-first chamber 121a, and a second-second pressure control valve configured to adjust pressure in the second-second chamber 122a.

The control device 30 may control the driving part 300 and the treatment apparatus 20. The control device 30 may control a posture of the seal-forming portion part 200 by controlling the driving part 300. For example, when the first chamber 110a and the second chamber 120a are equal in pressure, the control device 30 may control the driving part 300 to control the posture of the seal-forming portion part 200 so that the seal-forming portion part 200 is placed in the gastightness-introduced state. In a more detailed example, when the first chamber 110a and the second chamber 120a are equal in pressure based on the state in which the seal-forming portion part 200 is placed in the spaced state, the control device 30 may control the door driver 310 so that the door 221 is maximally lowered. When the door 221 is maximally lowered, the seal-forming portion part 200 may be placed in the gastightness-introduced state.

When the seal-forming portion part 200 is placed in the gastightness-introduced state, the control device 30 may control the treatment apparatus 20 so that the plurality of chambers may each have a necessary temperature and pressure. When the pressures in the two adjacent chambers, among the plurality of chambers, become different from each other as described above, the seal-forming portion part 200 may switch from the gastightness-introduced state to the gastight state by means of a compressive force applied to the seal-forming portion part 200 in the forward/rearward direction.

As described above, the gastight state is released when there is no temperature deviation between the two adjacent chambers, thereby preventing any one of the two adjacent chambers from affecting the state of the other chamber.

The control device 30 may be a processor electrically connected to the driving part 300, the plurality of pressure sensors, and the treatment apparatus 20 and configured to serve to decode and execute instructions based on information inputted in advance.

All the constituent elements, which constitute the embodiment of the present disclosure, may be integrally coupled or operate by being combined, but the present disclosure is not necessarily limited to the embodiment. That is, one or more of the constituent elements may be selectively combined and operated within the object of the present disclosure. In addition, unless explicitly described to the contrary, the words "comprise," "include," or "have" and variations such as "comprises," "comprising," "includes," "including," has," or "having," should be understood to imply the inclusion of stated elements but not the exclusion of any other elements. Unless otherwise defined, all terms including technical or scientific terms may have the same meaning as commonly understood by those skilled in the art to which the present disclosure pertains. The terms such as those defined in a commonly used dictionary may be interpreted as having meanings consistent with meanings in the context of related technologies and may not be interpreted as ideal or excessively formal meanings unless explicitly defined in the present disclosure.

The above description is simply given to illustratively describe the technical spirit of the present disclosure, and those skilled in the art to which the present disclosure pertains will appreciate that various changes and modifications are possible without departing from the essential characteristic of the present disclosure. Therefore, the embodiments disclosed in the present disclosure are provided for illustrative purposes only but are not intended to limit the technical spirit of the present disclosure. The scope of the technical spirit of the present disclosure is not limited thereby. The protective scope of the present disclosure should be construed based on the following claims, and all the technical spirit in the equivalent scope thereto should be construed as falling within the scope of the present disclosure.

## Claims

1. A carriage handling apparatus comprising:
a carriage accommodation part configured to provide a plurality of chambers configured to accommodate a carriage that is a heat treatment target; and
a seal-forming portion part configured to selectively form gastightness between first and second chambers that are two adjacent chambers among the plurality of chambers,
wherein the seal-forming portion part is configured to be placed in a gastight state, in which the seal-forming portion part forms the gastightness between the first chamber and the second chamber, when the first chamber and the second chamber are different in pressure from each other.

2. The carriage handling apparatus of claim 1, wherein the seal-forming portion part is further configured to be placed in a non-gastight state that is a state in which the seal-forming portion part departs from the gastight state when the first chamber and the second chamber are equal in pressure to each other.

3. The carriage handling apparatus of claim 2, wherein when a direction in which the first chamber and the second chamber are directed toward each other is referred to as a forward/rearward direction, a compressive force is applied to the seal-forming portion part in the forward/rearward direction when the seal-forming portion part is placed in the gastight state, and the compressive force applied to the seal-forming portion part is eliminated when the seal-forming portion part switches from the gastight state to the non-gastight state.

4. The carriage handling apparatus of claim 3, wherein the seal-forming portion part is configured to allow a material to move between the first chamber and the second chamber when the seal-forming portion part is placed in the non-gastight state.

5. The carriage handling apparatus of claim 2, wherein the seal-forming portion part comprises:
a plate disposed between the first chamber and the second chamber and formed with a communication hole configured to allow the first chamber and the second chamber to communicate with each other; and
a door configured to close the communication hole, and
wherein when a direction in which the door is directed toward the plate is referred to as a first direction, the door is placed at a closed position, at which the door closes the communication hole, as the door presses the plate in the first direction when the seal-forming portion part is placed in the gastight state.

6. The carriage handling apparatus of claim 5, wherein when a direction in which the first chamber and the second chamber are directed toward each other is referred to as a forward/rearward direction, the door is configured to move in an upward/downward direction relative to the plate between a closure-introduced position, at which the door blocks the communication hole, and an opened position, at which the door does not block at least a part of the communication hole, when the seal-forming portion part is placed in the non-gastight state.

7. The carriage handling apparatus of claim 6, wherein the seal-forming portion part further comprises a guide rail configured to guide a movement of the door in the upward/downward direction,
wherein the door comprises a guide roller configured to rotate about a rotation axis, which extends in the forward/rearward direction, along the guide rail when the door moves in the upward/downward direction,
wherein the guide roller is formed with a roller groove into which the guide rail is inserted, and
wherein a width of the roller groove in the forward/rearward direction is larger than a width of the guide rail in the forward/rearward direction.

8. The carriage handling apparatus of claim 6, wherein the pressure in the first chamber is equal to or higher than the pressure in the second chamber, and
wherein the first chamber, the door, the plate, and the second chamber are sequentially arranged in the forward/rearward direction.

9. The carriage handling apparatus of claim 8, wherein the second chamber comprises a second-first chamber and a second-second chamber respectively disposed at two opposite ends of the first chamber based on the forward/rearward direction,
wherein the seal-forming portion part comprises:
a first seal-forming portion part disposed between the first chamber and the second-first chamber; and
a second seal-forming portion part disposed between the first chamber and the second-second chamber, and
wherein when a door and a plate of the first seal-forming portion part are respectively referred to as a first door and a first plate and a door and a plate of the second seal-forming portion part are respectively referred to as a second door and a second plate, the first plate, the first door, the second door, and the second plate are sequentially arranged in the forward/rearward direction.

10. The carriage handling apparatus of claim 8, wherein based on a state in which the door is placed in a maximally lowered state, the door is placed at the closure-introduced position when the pressure in the first chamber is equal to the pressure in the second chamber, and the door is placed at the closed position when the pressure in the first chamber is higher than the pressure in the second chamber.

11. The carriage handling apparatus of claim 10, wherein the door is configured to move toward the plate when the door switches from the closure-introduced position to the closed position.

12. The carriage handling apparatus of claim 5, wherein the seal-forming portion part further comprises a packing configured to maintain the gastightness formed between the first chamber and the second chamber by being tightly attached to the plate and the door when the seal-forming portion part is placed in the gastight state.

13. The carriage handling apparatus of claim 12, wherein a ring-shaped groove, which surrounds the communication hole, is formed in one surface of the plate that faces the door, and
wherein the packing is inserted into the groove and fixed to the plate.

14. A carriage handling system comprising:
a treatment apparatus configured to heat-treat a carriage;
a carriage accommodation part configured to provide a plurality of chambers configured to accommodate the carriage;
a seal-forming portion part configured to selectively form gastightness between first and second chambers that are two adjacent chambers among the plurality of chambers; and
a control device configured to control a posture of the seal-forming portion part,
wherein the control device controls the posture of the seal-forming portion part so that the seal-forming portion part is placed in a gastightness-introduced state when the first chamber and the second chamber are equal in pressure, and
wherein when a direction in which the first chamber and the second chamber are directed toward each other is referred to as a forward/rearward direction, the seal-forming portion part placed in the gastightness-introduced state switches to a gastight state, in which the seal-forming portion part forms the gastightness between the first chamber and the second chamber, by a compressive force applied to the seal-forming portion part in the forward/rearward direction when the pressures in the first and second chambers become different from each other.

15. The carriage handling system of claim 14, wherein the treatment apparatus is configured to independently provide thermal energy to each of the plurality of chambers.
